# EUROPÄISCHE PATENTSCHRIFT

(11) **EP 3 817 939 B1**
(45) Veröffentlichungstag und Bekanntmachung des Hinweises auf die Patenterteilung: **24.08.2022**
(21) Anmeldenummer: 19733393.3
(22) Anmeldetag: 07.06.2019
(51) Int. Cl.: B60K 6/48, B60K 6/387

(54) **LEITUNGSELEMENT, HYBRIDMODUL UND ANTRIEBSANORDNUNG**
CONDUCTING ELEMENT, HYBRID MODULE AND DRIVE ASSEMBLY
ÉLÉMENT DE CONDUITE, MODULE HYBRIDE ET ARRANGEMENT D'ENTRAÎNEMENT

(30) Priorität: 05.07.2018 DE 102018116301
(43) Veröffentlichungstag der Anmeldung: 12.05.2021
(73) Patentinhaber: Schaeffler Technologies AG & Co. KG, 91074 Herzogenaurach (DE)
(72) Erfinder: ORTMANN, Simon, 76532 Baden-Baden (DE); TEPPER, Philipp, 77886 Lauf (DE); WEIS, Dominik, 77815 Bühl (DE)
(86) Internationale Anmeldenummer: PCT/DE2019/100519
(87) Internationale Veröffentlichungsnummer: WO 2020/007396

(56) Entgegenhaltungen:
- EP-A1- 1 215 418
- WO-A1-2018/024281
- DE-A1-102007 003 107
- DE-A1-102015 215 877

## Beschreibung

Die Erfindung betrifft ein Leitungselement zur Leitung eines Druckfluids zur hydraulischen Betätigung einer Betätigungseinrichtung einer Kupplungseinheit sowie zur Leitung eines Kühlfluids zur Kühlung einer Kupplungseinheit. Des Weiteren betrifft die Erfindung ein Hybridmodul, umfassend ein Gehäuse sowie ein damit mechanisch fest verbundenes erfindungsgemäßes Leitungselement. Außerdem betrifft die Erfindung eine Antriebsanordnung mit einem erfindungsgemäßen Hybridmodul.

Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, einen elektrische Maschine zur Erzeugung eines Antriebsdrehmoments mit einem Rotor, sowie einer Doppelkupplungsvorrichtung, mit der Drehmoment von der elektrischen Maschine und/ oder von der Trennkupplung auf einen Antriebsstrang übertragbar ist. Die Doppelkupplungsvorrichtung umfasst eine erste Teilkupplung und eine zweite Teilkupplung. Jeder angeordneten Kupplung ist jeweils ein Betätigungssystem zugeordnet.

Die elektrische Maschine ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors. Wenn ein Hybridmodul mit einer Doppelkupplung derart in einen Antriebsstrang integriert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden. Ein derartiges Hybridmodul wird auch als P2- Hybridmodul bezeichnet.

Eine solche Anordnung führt jedoch sehr häufig zu erheblichen Bauraumproblemen.

Aus dem Stand der Technik sind Hybridmodule bekannt, bei denen Kühlfluid für die Kupplung aus dem Getriebe gefördert und durch die Getriebeeingangswelle geleitet wird. Von dort wird das Kühlfluid über radial verlaufende Bohrungen an die Kupplung transportiert.

Bekannt ist weiterhin, dass das Druckfluid über eine in einem Gehäuseelement ausgebildete Druckleitung zwecks Versorgung einer hydraulischen Betätigungseinrichtung transportiert wird.

Ein entsprechendes Hybridmodul ist beispielsweise aus der WO 2018/024281 A1 bekannt. Fernes sind aus der EP 1 215 418 A1 Zusammenbauten für das Leiten von Druck- oder Kühlfluid innerhalb eines Getriebes bekannt.

Hiervon ausgehend liegt der vorliegenden Erfindung die Aufgabe zugrunde, ein Leitungselement sowie ein damit ausgestattetes Hybridmodul und eine Antriebsanordnung zur Verfügung zu stellen, die den Transport von Druckfluid und Kühlfluid mit geringem axialem Bauraumbedarf kombinieren.

Die Aufgabe wird durch das erfindungsgemäße Leitungselement nach Anspruch 1 gelöst. Vorteilhafte Ausgestaltungen des Leitungselements sind in den Unteransprüchen 2 bis 8 angegeben. Ergänzend wird ein Hybridmodul für ein Kraftfahrzeug, welches das erfindungsgemäße Leitungselement aufweist, gemäß Anspruch 9 sowie eine Antriebsanordnung, welche das erfindungsgemäße Hybridmodul aufweist, gemäß Anspruch 10 zur Verfügung gestellt.

Die Begriffe "radial", "axial" und "Umfangsrichtung" beziehen sich im Rahmen der vorliegenden Erfindung immer auf die Zylinderachse des Leitungselements, die bei Integration des Leitungselements in einem Hybridmodul der Rotationsachse der Kupplungseinheit bzw. der Rotationsachse der elektrischen Maschine bzw. der Rotationsachse des Hybridmoduls entspricht.

Die Erfindung betrifft ein Leitungselement zur Leitung eines Druckfluids zur hydraulischen Betätigung einer Betätigungseinrichtung einer Kupplungseinheit sowie zur Leitung eines Kühlfluids zur Kühlung einer Kupplungseinheit, umfassend einen zylindrischen Abschnitt, insbesondere einen hohlzylindrischen Abschnitt, sowie einen sich im Wesentlichen in einer senkrecht zur Zylinderachse des zylindrischen Abschnittes erstreckenden Ebene angeordneten und mit dem zylindrischen Abschnitt mechanisch verbundenen Befestigungsabschnitt.

Im Befestigungsabschnitt ist dabei wenigstens ein Druckfluidkanal ausgebildet, der im Wesentlichen radial zur Zylinderachse verläuft, zum Transport von Druckfluid nach radial innen zwecks Versorgung einer an oder in dem Befestigungsabschnitt angeordneten hydraulischen Betätigungseinrichtung wobei der Druckfluidkanal radial außerhalb der Betätigungseinrichtung angeordnet ist.

Weiterhin bildet der Befestigungsabschnitt an einer axialen Außenseite, insbesondere die axiale Außenseite, die der Anordnung des zylindrischen Abschnitts axial gegenüberliegt, wenigstens ein Strömungsleitelement aus, welches im Wesentlichen radial zur Zylinderachse verläuft, zum Transport von Kühlfluid nach radial innen.

Das Leitungselement weist weiterhin wenigstens einen Kühlfluidkanal auf, welcher im zylindrischen Abschnitt mit wenigstens einer axialen Richtungskomponente ausgebildet ist, wobei das Strömungsleitelement strömungstechnisch mit dem Kühlfluidkanal verbunden ist zwecks Versorgung einer in der Umgebung des Leitungselements angeordneten oder anordbaren Kupplungseinheit und/oder elektrischen Maschine mit Kühlfluid.

Gemäß einem weiteren Aspekt der Erfindung bildet der Befestigungsabschnitt einen hohlzylinderförmigen Raum zur Ausbildung eines ringförmigen Betätigungszylinders der Betätigungseinrichtung zwecks Aufnahme eines ringförmigen Kolbens aus. Der Druckfluidkanal ist dabei strömungstechnisch mit dem hohlzylinderförmigen Raum verbunden, um ein Druckfluid in den hohlzylinderförmigen Raum zwecks Verschiebung eines dort angeordneten Kolbens zu leiten.

Alternativ kann das in einem Hybridmodul angeordnete Leitungselement mit einer Kolben-Zylinder-Einheit mechanisch verbunden sein, wobei die Kolben-Zylinder-Einheit die Betätigungseinrichtung für eine Kupplungseinheit realisiert.

Dabei kann das Leitungselement auch zwei hohlzylindrische Räume ausbilden, wobei im ersten hohlzylindrischen Raum der ringförmige Kolben angeordnet oder anordbar ist und im zweiten hohlzylindrischen Raum ein Rückstellelement, wie z.B. eine Rückstellfeder der Betätigungseinrichtung angeordnet oder anordbar ist.

Gemäß einer weiteren vorteilhaften Ausführungsform bildet der Befestigungsabschnitt an seiner radialen Außenseite wenigstens bereichsweise einen Umfangskanal aus, der strömungstechnisch mit dem Druckfluidkanal verbunden ist.

Alternativ oder ergänzend zur Ausbildung eines Umfangskanals auf der radialen Außenseite des Befestigungsabschnitts kann ein solcher Umfangskanal im Hybridmodulgehäuse ausgebildet sein, und zwar in einem Bereich, der an der radialen Außenseite des Befestigungsabschnitts anliegt.

Der erfindungsgemäße Gegenstand wird weiterhin derart realisiert, dass das Strömungsleitelement als Vertiefung in der axialen Oberfläche des Befestigungsabschnitts ausgebildet ist.

In einer einfachen und stabilen Ausführungsform ist auf oder an der axialen Außenseite des Befestigungsabschnitts eine umlaufende Ringnut zur Weiterleitung des Kühlfluids an das Strömungsleitelement angeordnet, wobei die Ringnut mit dem Strömungsleitelement strömungstechnisch verbunden ist.

Dabei können auch mehrere, insbesondere zwei umlaufende Ringnuten mit unterschiedlichen radialen Abständen zur Zylinderachse vorhanden sein, um eine ideale Leitung bzw. ideale Verteilung des Kühlfluids zu gewährleisten.

Im Befestigungsabschnitt kann anstatt einer umlaufenden Ringnut auch ein ringförmiger Absatz ausgebildet sein, der dann bei axialer Anlage eines Deckelelements in axialer Richtung begrenzt ist, wodurch somit eine Nut ausgebildet ist.

Gemäß einer weiteren Ausführungsform ist ein Strömungsleitelement mit mehreren Kühlfluidkanälen, insbesondere drei Kühlfluidkanälen, strömungstechnisch verbunden. Es kann auch genau ein Strömungsleitelement vorhanden sein, welches in bzw. an dem Befestigungsabschnitt angeordnet ist, welches dann strömungstechnisch mit mehreren Kühlfluidkanälen gekoppelt ist. Dabei kann ein Auslass eines Strömungsleitelements im Wesentlichen unmittelbar an einen Einlass eines Kühlfluidkanals anschließen.

Erfindungsgemäß kann auch vorgesehen sein, dass das Leitungselement eine Dichtscheibe umfasst, welche axial an der axialen Außenseite des Befestigungsabschnitts angeordnet ist und zumindest an der axialen Außenseite des Befestigungsabschnitts wenigstens bereichsweise anliegt, wobei die Dichtscheibe dabei eine Fluidleitungsausnahme umfasst, deren Kontur in axialer Richtung zumindest um das Strömungsleitelement herum ausgebildet ist.

In einer erfindungsgemäßen Ausführungsform der Erfindung ist der Kühlfluidkanal als Hohlzylinder ausgestaltet und weist zusätzlich zu seiner axialen Richtungskomponente im zylindrischen Abschnitt auch eine radiale Richtungskomponente auf, wobei sich der Kühlfluidkanal mit zunehmender Entfernung vom Befestigungsabschnitt der Zylinderachse nähert. Dabei kann das Leitungselement mehrere Kühlfluidkanäle umfassen. Es kann vorgesehen sein, dass diese mehreren Kühlfluidkanäle am Umfang verteil, insbesondere in regelmäßigen Abständen verteilt angeordnet sind oder aber auch, dass die mehreren Kühlfluidkanäle in einem begrenzten Winkelbereich von 10° bis 40°, insbesondere 20° bis 30° angeordnet sind. Dabei können bei einer Anordnung am Umfang verteilt insbesondere vier und bei einer Anordnung in einem begrenzten Winkelbereich insbesondere drei Kühlfluidkanäle vorgesehen sein.

Des Weiteren wird erfindungsgemäß ein Hybridmodul für ein Kraftfahrzeug zum Ankoppeln einer Verbrennungskraftmaschine sowie eines Getriebes zur Verfügung gestellt, das eine elektrische Maschine, ein Hybridmodulgehäuse, ein mechanisch fest mit dem Hybridmodulgehäuse verbundenes erfindungsgemäßes Leitungselement, eine Druckleitung zur Zuführung eines Druckfluids sowie eine Kühlleitung zur Zuführung eines Kühlfluids aufweist, wobei die Druckleitung strömungstechnisch mit dem Druckfluidkanal im Befestigungsabschnitt des Leitungselements verbunden ist und die Kühlleitung strömungstechnisch mit dem Strömungsleitelement des Leitungselements verbunden ist.

Bei der Integration des Leitungselements in ein Hybridmodul kann auf der radialen Außenseite des zylindrischen Abschnitts des Leitungselements ein Rotationslager zur Stützung einer Kupplungseinheit sowie zur Stützung eines Rotorträgers eines Rotors der elektrischen Maschine sitzen. Weiterhin kann sich eine Zwischenwelle radial an der radialen Innenseite des Leitungselements über Rotationslager abstützen. Es kann außerdem vorgesehen sein, dass die radiale Außenseite des zylindrischen Abschnitts ein Gewinde umfasst, auf welchem eine Vorlastmutter angeordnet ist, um das Rotationslager mit einer axialen Vorlast zu beaufschlagen. Um das Leitungselement fest mit dem Hybridmodulgehäuse zu verbinden können z.B. mehrere Schraubverbindungen vorgesehen sein, die eine Befestigung gewährleisten.

Des Weiteren kann auf der axialen Außenseite des Befestigungsabschnitts des Leitungselements ein Deckelelement angeordnet sein. Dabei ist das Deckelement ringförmig um die Rotationsachse ausgestaltet und liegt an der axialen Außenseite des Befestigungsabschnitts an, wobei es sich in radialer Richtung weiter nach radial außen erstrecken kann als der Befestigungsabschnitt, wobei es dann mit seinem überragenden radial äußeren Bereich am Gehäuseabschnitt des Hybridmodulgehäuses anliegt, an welchem das Leitungselement angeordnet ist. Das Deckelement begrenzt damit die auf der axialen Außenseite des Befestigungsabschnitts ausgebildeten Elemente, wie z.B. das Strömungsleitelement, in axialer Richtung. Das Deckelelement kann dabei mit Schraubverbindungen am Hybridmodulgehäuse und/ oder dem Leitungselement fixiert sein oder in seiner Position axial neben dem Leitungselement verstemmt werden. Auch eine Kombination dieser Fixierungen bzw. Befestigungen ist möglich, dabei kann das Deckelelement z.B. radial außen mit dem Hybridmodulgehäuse verschraubt und radial innen am zylindrischen Abschnitt des Leitungselements verstemmt sein.

Insbesondere können weiterhin mehrere Dichtelemente vorgesehen sein, wie z.B. Dichtringe zwischen dem Hybridmodulgehäuse und dem Deckelement und/oder ein Radial-Wellendichtring zwischen dem Deckelelement und einer Zwischenwelle, auf welcher das Leitungselement angerordnet ist.

Durch die Dichtelemente sowie die Anordnung des Deckelelements kann das in Leitungen und Kanälen transportierte Kühlfluid und Druckfluid strömungstechnisch nicht an die Umwelt austreten. Weiterhin können durch die Dichtelemente die transportieren Fluide Kühlfluid und Druckfluid strömungstechnisch voneinander getrennt werden. Ergänzend kann das Hybridmodul einen Entlüftungskanal umfassen, welcher strömungstechnisch mit dem Umfangskanal verbunden ist, wobei im Entlüftungskanal ein Entlüftungsventil angeordnet ist, wodurch eine Entlüftung der Leitungen und Kanäle realisiert werden kann, in denen z.B. ein Druckfluid transportierbar ist. Dabei ist das Entlüftungsventil für eine optimale Entlüftungs-Funktion in Gebrauchslage des Hybridmoduls an einem höchsten Punkt des Gehäuseabschnitts, in dem das Leitungselement angeordnet ist, anzuordnen.

Weiterhin wird erfindungsgemäß eine Antriebsanordnung, umfassend ein erfindungsgemäßes Hybridmodul sowie ein Antriebsaggregat, insbesondere eine Verbrennungskraftmaschine, sowie ein Getriebe zur Verfügung gestellt, wobei das Hybridmodul mit dem Antriebsaggregat und dem Getriebe mechanisch über wenigstens eine Kupplungseinheit des Hybridmoduls verbunden oder verbindbar ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
- Fig. 1:: ein erfindungsgemäßes Hybridmodul in Schnittansicht;
- Fig. 2:: ein Ausschnitt des im Hybridmodulgehäuse angeordneten Leitungselements, geschnitten in einer Druckleitung;
- Fig.3:: das Leitungselement perspektivisch dargestellt, geschnitten in einem Druckfluidkanal;
- Fig.4:: ein Ausschnitt des im Hybridmodulgehäuse angeordneten Leitungselements, geschnitten in einer Kühlleitung;
- Fig.5:: das Leitungselement perspektivisch dargestellt, geschnitten in einem Kühlfluidkanal;
- Fig.6:: ein Ausschnitt des im Hybridmodulgehäuse angeordneten Leitungselements, geschnitten in einer Befestigung des Deckelelements;
- Fig.7:: eine perspektivische Ansicht des Gehäuseabschnitts, in dem das Leitungselement befestigt ist, mit dem vom Deckelelement bedeckten Leitungselement;
- Fig.8:: eine perspektivische Ansicht des Gehäuseabschnitts, in dem das Leitungselement befestigbar ist;
- Fig.9:: eine perspektivische Ansicht des Gehäuseabschnitts, in dem das Leitungselement befestigt ist;
- Fig. 10:: eine perspektivische Ansicht des Gehäuseabschnitts, in dem das Leitungselement befestigt ist, mit Leitungselement und Dichtscheibe;
- Fig.11: :eine perspektivische Ansicht des Gehäuseabschnitts, in dem das Leitungselement befestigt ist, mit Deckelelement;
- Fig.12:: ein Ausschnitt des im Hybridmodulgehäuse befestigten Leitungselements mit Dichtscheibe, geschnitten in der Fixierung der Dichtscheibe;
- Fig.13:: ein Ausschnitt des im Hybridmodulgehäuse befestigten Leitungselements mit Dichtscheibe, geschnitten in einem Kühlfluidkanal;
- Fig.14:: ein Ausschnitt des im Hybridmodulgehäuse befestigten Leitungselements mit Dichtscheibe, geschnitten in einem Druckfluidkanal; und
- Fig.15:: ein Ausschnitt des im Hybridmodulgehäuse befestigten Leitungselements mit Dichtscheibe, geschnitten in einem Entlüftungskanal und Entlüftungsventil.

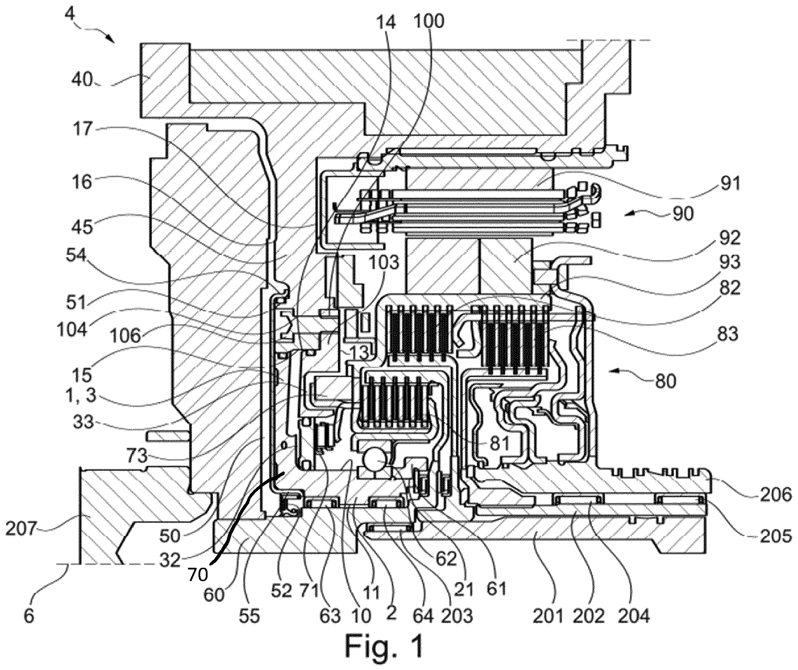

In Fig. 1 ist ein in geschnittener Ansicht dargestelltes erfindungsgemäßes Hybridmodul 4 zu sehen. Das Hybridmodul 4 umfasst dabei ein erfindungsgemäßes Leitungselement 1, eine elektrische Maschine 90, eine Kupplungseinheit 80, eine Betätigungseinrichtung 70, einen Schwingungsdämpfer 200 sowie ein Hybridmodulgehäuse 40. Das erfindungsgemäße Hybridmodul 4 ist dabei insbesondere in eine erfindungsgemäße Antriebsanordnung integrierbar. Eine solche Antriebsanordnung umfasst neben einem erfindungsgemäßen Hybridmodul 4 weiterhin ein Antriebsaggregat, insbesondere eine Verbrennungskraftmaschine, sowie ein Getriebe, wobei das Hybridmodul 4 mit dem Antriebsaggregat und dem Getriebe mechanisch über wenigstens die Kupplungseinheit 80 des Hybridmoduls 4 verbunden oder verbindbar ist. Dabei umfasst das Hybridmodul 4 eine Zwischenwelle 60, welche zwecks Drehmomentübertragung mit der Verbrennungskraftmaschine verbunden ist. Eine erste sowie eine zweite Getriebeeingangswelle 201, 202 des Hybridmoduls 4 sind dabei zwecks Drehmomentübertragung mit dem Getriebe verbunden. Die axiale Seite, von welcher sich die Zwischenwelle 60 in das Hybridmodul 4 erstreckt, kann somit als die der Verbrennungskraftmaschine zugewandte Seite bezeichnet werden.

Das Leitungselement 1 ist hier radial innerhalb des Hybridmodulgehäuses 40 angeordnet. Das Leitungselement 1 umfasst einen zylindrischen Abschnitt 2 sowie einen Befestigungsabschnitt 3, wobei der Befestigungsabschnitt 3 sich im Wesentlichen in radialer Richtung erstreckt und fest mit dem zylindrischen Abschnitt 2 verbunden ist. Der Befestigungsabschnitt 3 bildet dabei an seiner radialen Außenseite 14 einen Befestigungsvorsprung 103 aus, welcher sich im Wesentlichen in radialer Richtung erstreckt, wobei der Befestigungsvorsprung 103 mehrere Befestigungsbohrungen 100 aufweist, welche sich in axialer Richtung durch den Befestigungsvorsprung 103 erstrecken. Mit der radialen Außenseite 14 des Befestigungsabschnitts 3 liegt das Leitungselement 1 an der radialen Innenseite 15 des Gehäuseabschnitts 45 des Hybridmodulgehäuses 40 an und mit der der Verbrennungskraftmaschine zugewandten axialen Seite des Befestigungsvorsprungs 103 liegt das Leitungselement 1 an der axialen Innenseite 17 des Gehäuseabschnitts 45 des Hybridmodulgehäuses 40 an. Dieser radiale Gehäuseabschnitt 45 umfasst in axialer Richtung verlaufende erste Gehäusebohrungen 104. Bei Anordnung des Leitungselements 1 im Hybridmodul 4 sind eine jeweilige erste Gehäusebohrung 104 und eine jeweilige Befestigungsbohrung 100 axial in Deckung gebracht, sodass unter Verwendung von in jeweils eine erste Gehäusebohrung 104 und eine Befestigungsbohrung 100 eingeschraubten ersten Schraube 106 eine feste Verbindung zwischen Hybridmodulgehäuse 40 und Leitungselement 1 realisiert ist.

Auf der axialen Innenseite 13 des Befestigungsabschnitts 3, also auf der der Verbrennungskraft abgewandten Seite des Befestigungsabschnitts 3, umfasst das Leitungselement 1 einen ersten hohlzylindrischen Raum 32 sowie einen zweiten hohlzylindrischen Raum 33. Die beiden hohlzylindrischen Räume 32, 33 sind dabei in radialer Richtung nebeneinander angeordnet, wobei ein jeweiliger hohlzylindrischer Raum 32, 33 in axialer Richtung auf seiner der Verbrennungskraftmaschine abgewandten Seite offen ist. Dabei bildet die radiale Außenseite 10 des zylindrischen Abschnitts 2 die radiale Innenseite des ersten hohlzylindrischen Raums 32 aus, wobei die radiale Außenseite sowie die der Verbrennungskraftmaschine zugewandten Seite des ersten hohlzylindrischen Raums 32 vom Befestigungsabschnitt 3 begrenzt ist. Weiterhin ist der zweite hohlzylindrische Raum 33 auf seiner radialen Innen- und Außenseite sowie auf seiner der Verbrennungskraftmaschine zugewandten Seite vom Befestigungsabschnitt 3 begrenzt.

Der zylindrische Abschnitt 2 ist als Hohlzylinder ausgebildet, wobei radial innerhalb des zylindrischen Abschnitts 2 die Zwischenwelle 60 angeordnet ist. Auf der radialen Außenseite 10 des zylindrischen Abschnitts 2 ist ein erstes Rotationslager 62 angeordnet, auf welchem die Kupplungseinheit 80 sowie zumindest mittelbar ein um die Rotationsachse 6 des Hybridmoduls 4 rotierbarer Rotorträger 93 und darauf ein Rotor 92 der elektrischen Maschine 90 sich radial abstützt. Axial neben dem ersten Rotationslager 62 ist dabei eine Vorlastmutter 61 auf einem Gewinde 21 angeordnet ist, welches auf der radialen Außenseite 10 des zylindrischen Abschnitts 2 an dem der Verbrennungskraftmaschine abgewandten axialen Ende des zylindrischen Abschnitts 2 ausgebildet ist. Die Vorlastmutter 61 beaufschlagt dabei das erste Rotationslager 62 mit einer axialen Vorlast. Des Weiteren stützt sich die Zwischenwelle 60 über ein zweites Rotationslager 63 sowie eine drittes Rotationslager 64 an der radialen Innenseite 11 des zylindrischen Abschnitts 2 ab.

Axial neben dem Leitungselement 1, an der axialen Außenseite 13 des Befestigungsabschnitts 3, ist ein Deckelelement 50 angeordnet. Das Deckelelement 50 ist als axial dünnes Blech und in einer Ebene, die senkrecht zur Rotationsachse 6 des Hybridmoduls 4 liegt, ringförmig ausgestaltet, wobei das Deckelelement 50 an der axialen Außenseite 13 des Befestigungsabschnitts 3 des Leitungselements 1 anliegt. Dabei erstreckt sich das Deckelelement 50 in radialer Richtung über das Leitungselement 1 hinaus und liegt mit seinem überragenden radial äußeren Bereich an dem radialen Gehäuseabschnitt 45 an. Das Deckelelement 50 umfasst einen ersten axialen Deckelfortsatz 54 sowie einen zweiten axialen Deckelfortsatz 55, welche sich in axialer Richtung in die der Verbrennungskraftmaschine abgewandte Richtung erstrecken. Der erste axiale Deckelfortsatz 54 ist dabei an der radialen Außenseite des Deckelelements 50 ausgebildet und liegt am radialen Gehäuseabschnitt 45 an, wobei zwischen dem radialen Gehäuseabschnitt 45 und dem Deckelelement 50 in radialer Richtung eine erste Deckelelementdichtung 51 angeordnet ist. Der zweite axiale Deckelfortsatz 55 ist an der radialen Innenseite des Deckelelements 50 ausgebildet und liegt an der radialen Innenseite 11 des zylindrischen Abschnitts 2 an, wobei zwischen dem Deckelelement 50 und der Zwischenwelle 60 in radialer Richtung eine zweite Deckelelementdichtung 52 angeordnet ist.

Die elektrische Maschine 90 umfasst einen Stator 91, welcher fest mit dem Hybridmodulgehäuse 40 verbunden ist, sowie einen um eine Rotationsachse 6 drehbar gelagerten Rotor 92, wobei der Rotor 92 auf einem Rotorträger 93 angeordnet und mit diesem fest verbunden ist. Der Rotor 92 bzw. der Rotorträger 93 stützen sich dabei über das erste Rotationslager 62 auf dem Leitungselement 1 ab.

Die Kupplungseinheit 80 umfasst eine Trennkupplung 81 sowie eine erste Teilkupplung 82 und eine zweite Teilkupplung 83, wobei die Kupplungseinheit 80 radial innerhalb der elektrischen Maschine 90, also radial innerhalb des Rotorträgers 93 angeordnet ist. Ein Ausgangselement der Trennkupplung 81 bildet dabei den Rotorträger 93 aus, wobei ein Ausgangselement der ersten Teilkupplung 82 zwecks Drehmomentübertragung mit der ersten Getriebeeingangswelle 201 und ein Ausgangselement der zweiten Teilkupplung 83 zwecks Drehmomentübertragung mit der zweiten Getriebeeingangswelle 202 verbunden ist. Die erste Getriebeeingangswelle 201 ist dabei zumindest bereichsweise radial innerhalb der als Hohlwelle ausgestalteten zweiten Getriebeeingangswelle 202 angeordnet. Die erste Getriebeeingangswelle 201 ist außerdem bereichsweise radial innerhalb der Zwischenwelle 60 angeordnet, wobei zwischen der radialen Außenseite der ersten Getriebeeingangswelle 201 und der radialen Innenseite der Zwischenwelle 60 ein viertes Rotationslager 203 angeordnet ist. Auf der radialen Außenseite der zweiten Getriebeeingangswelle 202 sind ein fünftes Rotationslager 204 sowie ein sechstes Rotationslager 205 angeordnet, mit welchen sich die zweite Getriebeeingangswelle 202 auf der radialen Innenseite eines Betätigungsleitungsträgers 206 abstützt. Der Betätigungsleitungsträger 206 ist dabei mit einem Eingangselement der ersten und zweiten Teilkupplung 82, 83 verbunden und dient zur Leitung von Fluid zur Betätigung der ersten und zweiten Teilkupplung 82, 83.

Die Betätigungseinrichtung 70 weist einen Kolben 71 sowie eine Rückstellfeder 73 auf, wobei die Betätigungseinrichtung 70 dazu eingerichtet ist, die Trennkupplung 81 zu betätigen, also unter Verwendung des Kolbens 71 zu schließen und unter Verwendung der Rückstellfeder 73 zu öffnen. Dabei ist der Kolben 71 im ersten hohlzylindrischen Raum 32 und die Rückstellfeder 73 im zweiten hohlzylindrischen Raum 33 angeordnet. Der erste hohlzylindrische Raum 32 dient somit als Betätigungszylinder 34 für den Kolben 71 der Betätigungseinrichtung 70.

Der Schwingungsdämpfer 200 ist auf der der Verbrennungskraftmaschine zugewandten Seite des Hybridmoduls 4 angeordnet und drehfest mit einer Abtriebswelle 207 verbunden, welche zur Drehmomentübertragung mit der Verbrennungskraftmaschine verbunden ist, und drehfest mit einer Zwischenwelle 60 verbunden.

Die in Figur 1 dargestellte Ausgestaltung des Leitungselements 1 sowie die Anordnung des Leitungselements 1 im Hybridmodul 4 ist ebenfalls repräsentativ für die nachfolgenden Figuren, zumindest für die Figuren, in denen ein Leitungselement 1 oder ein in einem Hybridmodul 4 angeordnetes Leitungselement 1 dargestellt ist. Demnach zeigen diese nachfolgenden Figuren weitere, zum Teil nicht in Figur 1 ersichtliche Aspekte der Erfindung.

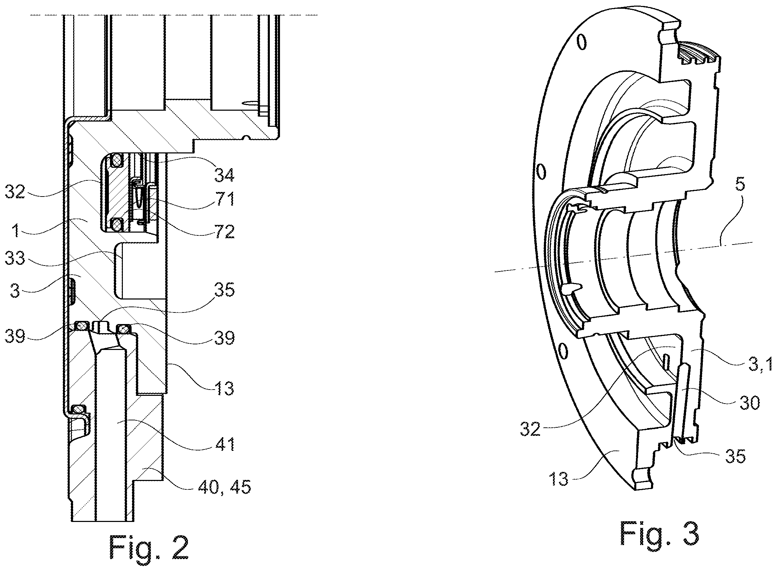

In den Figuren 2 bis 7 ist eine erste mögliche Ausführungsform eines Leitungselements 1 integriert in ein Hybridmodul 4 sowie ein Hybridmodul 4 dargestellt. Dabei ist der Schnitt in einer jeweiligen geschnittenen Figur an einer derartigen Winkelposition gewählt, dass je ein bestimmter Aspekt der Erfindung zu sehen ist.

Die Figuren 2 und 3 sind derart geschnitten, dass der Verlauf nachvollzogen werden kann, über den ein Druckfluid erfindungsgemäß transportiert werden kann. Figur 2 zeigt dabei einen Ausschnitt des im Hybridmodulgehäuse 40 angeordneten Leitungselements 1, geschnitten in einer Druckleitung 41.

Dargestellt ist äquivalent zu der Ausführung in Figur 1 ein radialer Gehäuseabschnitt 45 des Hybridmodulgehäuses 40, an welchem das Leitungselement 1 angeordnet ist. Weiterhin zeigt Figur 2 eine im radialen Gehäuseabschnitt 45 angeordnete Druckleitung 41. Diese Druckleitung 41 erstreckt sich dabei in radialer Richtung durch den radialen Gehäuseabschnitt 45 hin zur radialen Seite des radialen Gehäuseabschnitts 45 an dem das Leitungselement 1 radial anliegt. Dabei umfasst das Leitungselement 1 einen Umfangskanal 35, welcher als Nut auf der radialen Außenseite 14 des Befestigungsabschnitts 3 des Leitungselements 1 ausgebildet ist und mit der Druckleitung 41 strömungstechnisch verbunden ist. Axial beidseitig neben dem Umfangskanal 35 ist jeweils eine Druckfluiddichtung 39 zwischen dem radialen Gehäuseabschnitt 45 und dem Leitungselement 1 angeordnet.

Im ersten hohlzylindrischen Raum 32 ist hier ein Kolben 71 der Betätigungseinrichtung 70 angeordnet. Der erste hohlzylindrische Raum 32 fungiert dabei als ringförmiger Betätigungszylinder 34, wobei der Kolben 71 ein Kolbendichtungselement 72 umfasst, welches den ersten hohlzylindrischen Raum 32 gegen die Umgebung innerhalb des Hybridmoduls 4, also gegen die Kupplungseinheit 80 und die elektrische Maschine 90, fluiddicht begrenzt.

Figur 3 zeigt ergänzend zu Figur 2 das Leitungselement 1 perspektivisch geschnitten in einem Druckfluidkanal 30. Der dargestellte Druckfluidkanal 30 erstreckt sich in radialer Richtung durch den Befestigungsabschnitt 3 des Leitungselements 1 und verbindet dabei strömungstechnisch den Umfangskanal 35 mit dem vom ersten hohlzylindrischen Raum 32 und dem Kolbendichtungselement 72 (hier nicht dargestellt) begrenzten Raum.

Mit dem in den Figuren 2 und 3 Gezeigten ist somit ersichtlich, dass ein Druckfluid aus der Druckleitung 41 aus dem radialen Gehäuseabschnitt 45 des Hybridmodulgehäuses 40 in einen Umfangskanal 35 auf der radialen Außenseite 14 des Befestigungsabschnitts 3 leitbar ist und von dort über ein durch den Befestigungsabschnitt 3 führenden Druckfluidkanal 30 zum Kolbendichtungselement 72 des Kolbens 71 führbar ist, damit der Kolben 71 in von der axialen Innenseite 13 des Befestigungsabschnitts 3 abgewandter axialer Richtung verschoben werden kann, wodurch das Betätigungssystem 70 die Trennkupplung 81 betätigen kann.

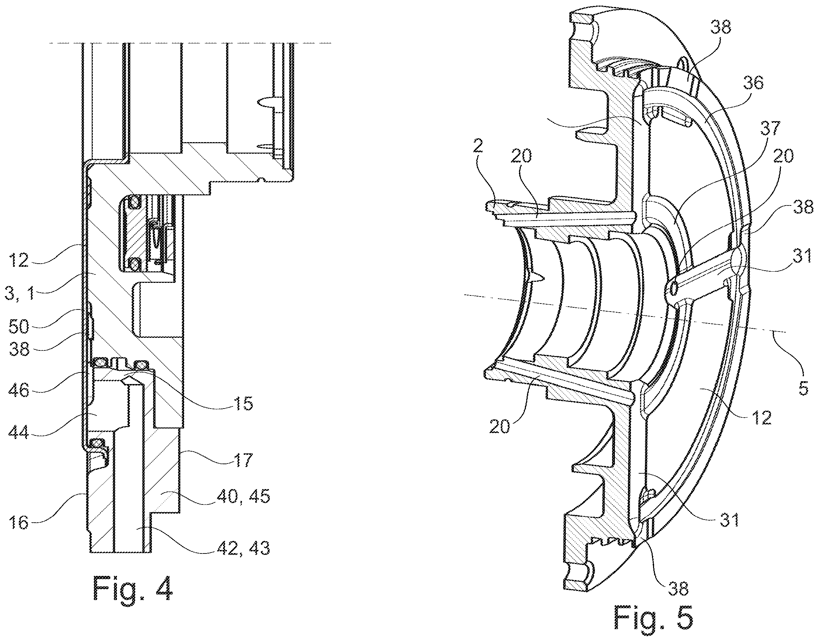

Die Figuren 4 und 5 sind derart geschnitten, dass der Verlauf nachvollzogen werden kann, über den ein Kühlfluid erfindungsgemäß transportiert werden kann.

Figur 4 zeigt dabei einen Ausschnitt des im Hybridmodulgehäuse 40 angeordneten Leitungselements 1, geschnitten in einer Kühlleitung 42.

Dargestellt ist äquivalent zu der Ausführung in Figur 1 ein radialer Gehäuseabschnitt 45 des Hybridmodulgehäuses 40, an welchem das Leitungselement 1 angeordnet ist. Weiterhin zeigt Figur 4 eine im radialen Gehäuseabschnitt 45 angeordnete Kühlleitung 42. Diese Kühlleitung 42 umfasst einen radialen sowie axialen Kühlleitungsabschnitt 43, 44. Der radiale Kühlleitungsabschnitt 43 erstreckt sich dabei in radialer Richtung durch den radialen Gehäuseabschnitt 45 zum Leitungselement 1 hin, tritt jedoch nicht aus der radialen Innenseite 15 des radialen Gehäuseabschnitts 45 aus. Der radiale Kühlleitungsabschnitt 43 erstreckt sich dabei so weit in radialer Richtung, dass er radial weiter innen endet als der radiale Punkt, an dem die Dichtung mittels der ersten Deckelelementdichtung 51 realisiert ist. Der axiale Kühlleitungsabschnitt 44 erstreckt sich im radialen Gehäuseabschnitt 45 von der axialen Außenseite 16 des Gehäuseabschnitts 45 in axialer Richtung. Dabei ist der axiale Kühlleitungsabschnitt 44 im Wesentlichen auf einer gleichen Winkelposition angeordnet wie der radiale Kühlleitungsabschnitt 43 und erstreckt sich so weit in axialer Richtung, dass die beiden Kühlleitungsabschnitte 43, 44 strömungstechnisch miteinander verbunden sind. Des Weiteren ist auf der axialen Außenseite 16 des Gehäuseabschnitts 45 ein Gehäuse-Überlaufabschnitt 46 angeordnet. Dieser Gehäuse-Überlaufabschnitt 46 grenzt dabei an die radiale Innenseite 15 des radialen Gehäuseabschnitts 45 und geht dort in einen auf der axialen Außenseite 12 des Befestigungsabschnitts 3 ausgebildeten Leitungselement-Überlaufabschnitt 38 über. Die beiden Überlaufabschnitte 38, 46 sind dabei als axiale Vertiefungen in die der Verbrennungskraftmaschine zugewandten Seite des radialen Gehäuseabschnitts 45 bzw. des Befestigungsabschnitts 3 ausgebildet, sodass eine strömungstechnische Verbindung zwischen der Kühlleitung 42 und der axialen Außenseite 12 des Befestigungsabschnitts 3 realisiert ist. Das Deckelelement 50 begrenzt dabei die Kühlleitung 42 bzw. dessen axialen Kühlleitungsabschnitt 44, sowie die beiden Überlaufabschnitte 38, 46 in axialer Richtung.

Figur 5 zeigt ergänzend zu Figur 4 das Leitungselement 1 perspektivisch geschnitten in einem Kühlfluidkanal 20. Der Kühlfluidkanal 20 ist als Hohlzylinder ausgestaltet und erstreckt sich mit einer axialen sowie einer radialen Richtungskomponente im zylindrischen Abschnitt 2, wobei der Kühlfluidkanal 20 dabei in einer vom Befestigungsabschnitt 3 weglaufenden Richtung zur Zylinderachse 5 hin läuft. Weiterhin zeigt Figur 5 eine erste sowie eine zweite umlaufende Ringnut 36, 37 und mehrere Strömungsleitelemente 31 auf der axialen Außenseite 12 des Befestigungsabschnitts 3. Die erste umlaufende Ringnut 36 ist dabei radial weiter außen angeordnet als die zweite umlaufende Ringnut 37. Die hier ebenfalls dargestellten Leitungselement-Überlaufabschnitte 38 sind dabei strömungstechnisch mit der ersten umlaufenden Ringnut 36 verbunden. Die dargestellten Strömungsleitelemente 31 sind als Vertiefungen in der axialen Außenseite 12 des Befestigungsabschnitts 3 ausgebildet und erstrecken sich in radialer Richtung, im Wesentlichen senkrecht zur Zylinderachse 5, zur radialem Mitte, wobei die Strömungsleitelemente 31 in Umfangsrichtung in regelmäßigen Abständen zueinander angeordnet sind. Der radiale äußere Endbereich eines jeweiligen Strömungsleitelements 31 ist dabei strömungstechnisch mit der ersten umlaufenden Ringnut 36 verbunden und der radial innere Endbereich eines jeweiligen Strömungsleitelements 31 ist dabei strömungstechnisch mit der zweiten umlaufenden Ringnut 37 verbunden, wobei im radial inneren Endbereich weiterhin jeweils ein Kühlfluidkanal 20 strömungstechnisch mit einem jeweiligen Strömungsleitelements 31 verbunden ist.

Mit dem in den Figuren 4 und 5 Gezeigten ist somit ersichtlich, dass ein Kühlfluid aus der Kühlfluidleitung 20 aus dem radialen Gehäuseabschnitt 45 des Hybridmodulgehäuses 40 über Überlaufabschnitte 38, 46 auf die axiale Außenseite 12 des Befestigungsabschnitts 3 transportierbar ist und dort über die erste und zweite umlaufende Ringnut 36, 37 sowie mehrere Strömungsleitelemente 31, welche axial vom Deckelelement 50 begrenzt sind, an mehrere Kühlfluidkanäle 20 geleitet wird, von wo aus sie aus dem der Verbrennungskraftmaschine abgewandten axialen Endbereich des zylindrischen Abschnitts 2 in einen Hybridmodulinnenraum transportiert wird, um dort die Kupplungseinheit 80 zu kühlen.

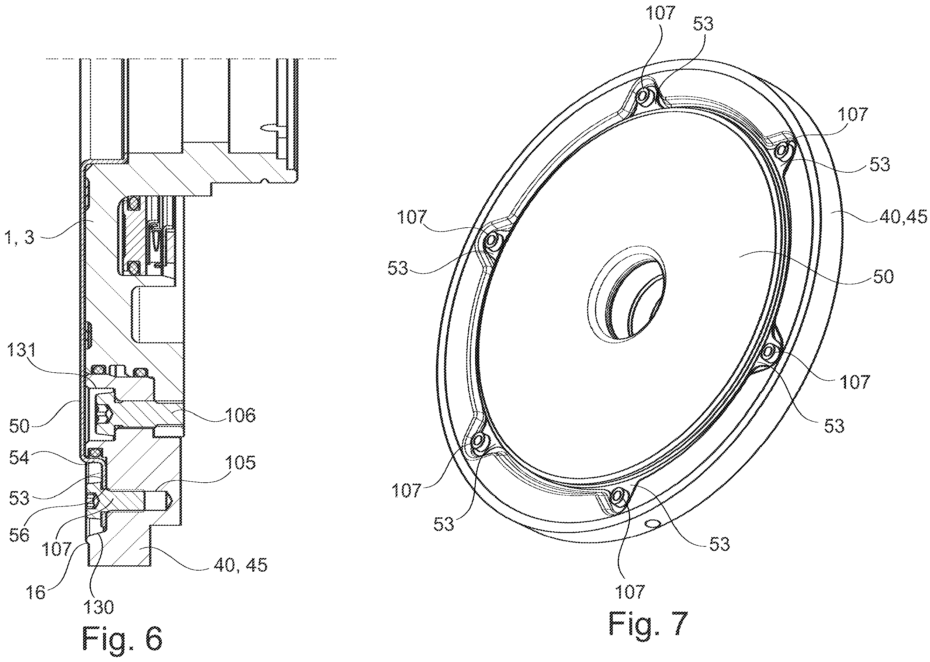

Die Figuren 6 und 7 zeigen die Anordnung des Deckelelements 50.

Figur 6 zeigt dabei einen Ausschnitt des im Hybridmodulgehäuse 40 angeordneten Leitungselements 1, geschnitten in einer Befestigung des Deckelelements 50.

Dargestellt ist äquivalent zu der Ausführung in Figur 1 ein radialer Gehäuseabschnitt 45 des Hybridmodulgehäuses 40, an welchem das Leitungselement 1 angeordnet ist. Das dargestellte Deckelelement 50 weist hier am ersten axialen Deckelfortsatz 54, insbesondere am Ende des ersten axialen Deckelfortsatzes 54, einen radialen Deckelfortsatz 53 auf. Das Deckelelement 50 weist somit im Bereich des ersten axialen und des radialen Deckelfortsatzes 53, 54 im Wesentlichen eine gestufte Kontur auf. Der radiale Deckelfortsatz 53 liegt dabei in axialer Richtung mit seiner der Verbrennungskraftmaschine abgewandten Seite am radialen Gehäuseabschnitt 45 an. Der radiale Gehäuseabschnitt 45 weist dabei im Bereich, in dem der radiale Deckelfortsatz 53 anliegt, eine zweite Gehäusebohrung 105 auf, welche sich in axialer Richtung in den radialen Gehäuseabschnitt 45 erstreckt. Durch eine Öffnung 56 im radialen Deckelfortsatz 53 ist eine zweite Schraube 107 in die zweite Gehäusebohrung 105 eingeschraubt und fixiert das Deckelelement 50 fest am radialen Gehäuseabschnitt 45 und somit am Hybridmodulgehäuse 40. Zu sehen ist weiterhin, dass der Schraubenkopf der ersten Schraube 106 in einer axialen Versenkung 131 in der axialen Außenseite 16 des Gehäuseabschnitts 45 versenkt und vom Deckelelement 50 axial überdeckt ist. Der Schraubenkopf der zweiten Schraube 107 ist in einer Ausbuchtung 130 in der axialen Außenseite 16 des Gehäuseabschnitts 45 versenkt.

Figur 7 zeigt ergänzend zu Figur 5 eine perspektivische Ansicht des radialen Gehäuseabschnitts 45, in dem das Leitungselement 1 befestigt ist, mit dem vom Deckelelement 50 bedeckten Leitungselement 1. Zu sehen sind sechs radiale Deckelfortsätze 53, die in Umfangsrichtung in regemäßigen Abständen angeordnet sind.

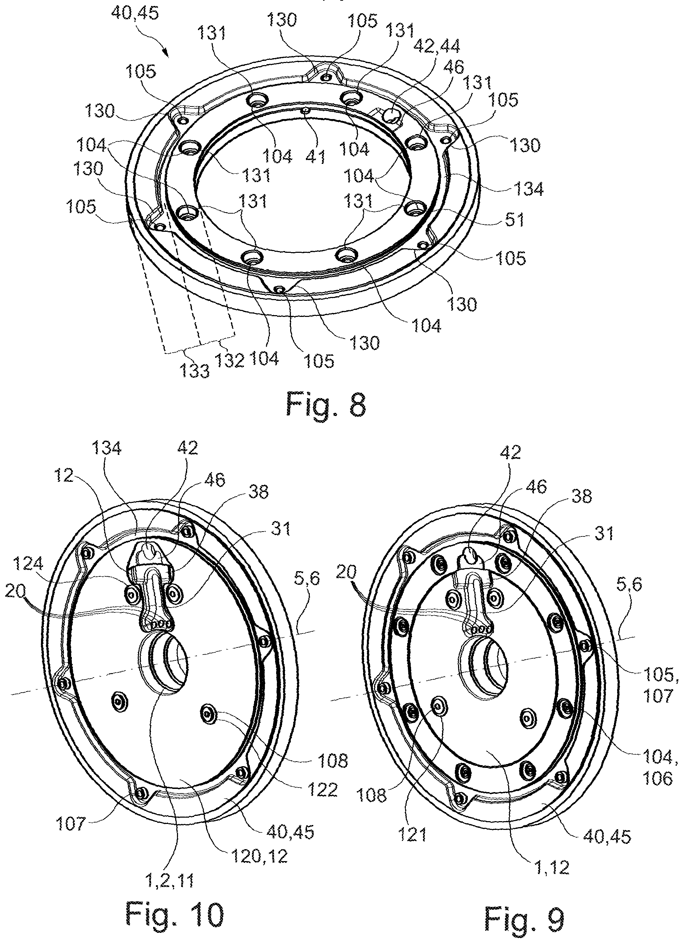

In den Figuren 8 bis 15 ist eine zweite mögliche Ausführungsform eines Leitungselements 1 integriert in ein Hybridmodul 4 sowie ein Hybridmodul4 dargestellt. Dabei ist der Schnitt in einer jeweiligen geschnittenen Figur an einer derartigen Winkelposition gewählt, dass je ein bestimmter Aspekt der Erfindung zu sehen ist.

Figuren 8, 9, 10 und 11 zeigen dabei eine Montageabfolge des Leitungselements 1 in einem Hybridmodul 4 gemäß einer zweiten Ausführungsform.

In Figur 8 ist der radiale Gehäuseabschnitt 45, in dem ein erfindungsgemäßes Leitungselement 1 befestigbar ist, dargestellt. Der in Figur 8 gezeigte radiale Gehäuseabschnitt 45 unterscheidet sich dabei nicht von dem radialen Gehäuseabschnitt 45 in den vorhergehend dargestellten Figuren. Dabei kann der radiale Gehäuseabschnitt 45 im Wesentlichen in einen radial inneren Bereich 132 sowie einen radial äußeren Bereich 133 unterteilt werden. Im radial äußeren Bereich 133 sind dabei Ausbuchtungen 130 angeordnet, in denen die zweiten Gehäusebohrungen 105 angeordnet sind, wobei die hier sechs Ausbuchtungen 130 in Umfangsrichtung in regelmäßigen Abständen angeordnet sind. Eine jeweilige Ausbuchtung 130 erstreckt sich dabei im Wesentlichen in radialer Richtung nach radial außen und ist von der der Verbrennungskraftmaschine zugewandten Seite in axialer Richtung vertieft. Im radial inneren Bereich 132 weist der radiale Gehäuseabschnitt 45 in Umfangsrichtung regelmäßig verteilt axiale Versenkungen 131 auf, in welchen die ersten Gehäusebohrungen 104 angeordnet sind. Des Weiteren sind in Umfangsrichtung zwischen zwei axiale Versenkungen 131 eine Kühlleitung 42 bzw. ein axialer Kühlleitungsabschnitt 44 sowie ein Gehäuse-Übergangsabschnitt 46 angeordnet. Zwischen dem radial äußeren und radial inneren Bereich 132 ist in axialer Richtung eine ringförmige Ausnehmung 134 ausgebildet, wobei die Ausbuchtungen 130 sich von der ringförmigen Ausnehmung 134 aus nach radial außen erstrecken und auf der der radialen Ausnehmung 134 zugewandten Seite des radial inneren Bereichs 132 die erste Deckelelementdichtung 51 angeordnet ist. Auf der radialen Innenseite 15 des radialen Gehäuseabschnitts 45 bzw. auf der radialen Innenseite des radial inneren Bereichs 132 ist dabei axial zentral im radialen Gehäuseabschnitts 45 eine Druckleitung 41 angeordnet, wobei die Druckleitung 41 und die Kühlleitung 42 auf unterschiedlichen Winkelpositionen angeordnet sind.

Figur 9 zeigt nun den in Figur 8 dargestellten radialen Gehäuseabschnitt 45, wobei hier das Leitungselement 1 gemäß der in den Figuren zur ersten Ausführungsform beschriebenen Ausführung angeordnet ist. Unterschiedlich zur ersten Ausführungsform, welche im Wesentlichen in den Figuren 2 bis 7 dargestellt ist, weist das Leitungselement 1 hier auf der axialen Außenseite 12 des Befestigungsabschnitts 3 lediglich ein Strömungsleitelement 31 auf. Ebenfalls unterschiedlich zur ersten Ausführungsform sind hier im radialen inneren Endbereich des dargestellten Strömungsleitelements 31 drei in Umfangsrichtung eng benachbarte und mit dem Strömungsleitelement 31 strömungstechnisch verbundene Kühlfluidkanäle 20 angeordnet, wobei das Strömungsleitelement 31 sich dazu hier im radial inneren Endbereich in Umfangsrichtung weiter erstreckt als der Rest des Strömungsleitelements 31. Das Strömungsleitelement 31 sowie der strömungstechnisch mit dem Strömungsleitelement 31 verbundene Leitungselement-Übergangsabschnitt 38 sind dabei im Wesentlichen an derselben Winkelposition angeordnet wie der Kühlfluidkanal 20 bzw. der Gehäuse-Überlaufabschnitt 46.

In den ersten sowie den zweiten Gehäusebohrungen 104, 105 sind hier erste sowie zweite Schrauben 106, 107 angeordnet. Weiterhin weist das Leitungselement 1 Fixierungsbohrungen 121 auf, in welche dritte Schrauben 108 eingeschraubt sind. Zwei der Fixierungsbohrungen 121 sind dabei in Umfangsrichtung auf gegenüberliegenden Seiten des Strömungsleitelements 31, im Wesentlichen radial zwischen dem radial inneren und radial äußeren Endbereich angeordnet.

Sowohl die Anordnung der ersten Schrauben 106 wie auch die der dritten Schrauben 108 in Figur 9 ist repräsentativ für ihre Position im fertigen Montagezustand des Leitungselements 1 im Hybridmodul 4. Im Fall der Betrachtung der Figur 9 als ein Zwischenstand bei der Montage eines erfindungsgemäßen Hybridmoduls 4, wären zu diesem Zeitpunkt weder die ersten noch die dritten Schrauben 106, 108 angeordnet.

Figur 10 zeigt das in Figur 9 Dargestellte, ergänzt um eine Dichtscheibe 120. Die Dichtscheibe 120 ist als ringförmige, axial schmale Scheibe ausgebildet, wobei sie radial innen von der radialen Innenseite 11 des zylindrischen Abschnitts 2 des Leitungselements 1 und radial außen von der ringförmigen Ausnehmung 134 begrenzt ist. Dabei weist die Dichtscheibe 120 mehrere Fixierungslöcher 122 aus, wobei die Fixierungslöcher 122 mit den Fixierungsbohrungen 121 in axialer Richtung in Deckung gebracht sind, sodass die dritten Schrauben 108 durch die Fixierungslöcher 122 in die Fixierungsbohrungen 121 durchgreifen können, um die Dichtscheibe 120 drehfest mit dem im Hybridmodul 4 angeordneten Leitungselement 1 zu verbinden. Weiterhin umfasst die Dichtscheibe 120 eine Fluidleitungsausnahme 124. Die Fluidleitungsausnahme 124 ist dabei als durch die gesamte axiale Dicke des Dichtungselements 120 durchgreifende Öffnung ausgebildet und weist eine in einer Ebene verlaufende Kontur auf, wobei diese Ebene im Wesentlichen senkrecht zur Rotationsachse 6 angeordnet ist. Die Fluidleitungsausnahme 124 liegt über ihre gesamte Kontur an der axialen Außenseite 12 des Befestigungsabschnitts 3 des Leitungselements 1 sowie an der der Verbrennungskraftmaschine zugewandte Seite des radialen Gehäuseabschnitts 45 an, verläuft jedoch eng um die Kühlleitung 42, die Übergangsabschnitte 38, 46 sowie das Strömungsleitelement 31, sodass von dem von der Dichtscheibe 120 bedeckten radial inneren Bereich 132 des Gehäuseabschnitts 45 und der axialen Außenseite 12 des Befestigungsabschnitts 3 des Leitungselements 1 im Wesentlichen nur noch diese Elemente sichtbar sind.

Wie auch in Figur 9 sind in Figur 10 sowohl die Anordnung der ersten Schrauben 106 wie auch die der dritten Schrauben 108 repräsentativ für ihre Position bei fertiger Montage des Leitungselements 1 im Hybridmodul 4. Im Fall der Betrachtung der Figur 10 als ein Zwischenstand bei der Montage eines erfindungsgemäßen Hybridmoduls, wären zu diesem Zeitpunkt weder die ersten noch die dritten Schrauben 106, 108 angeordnet.

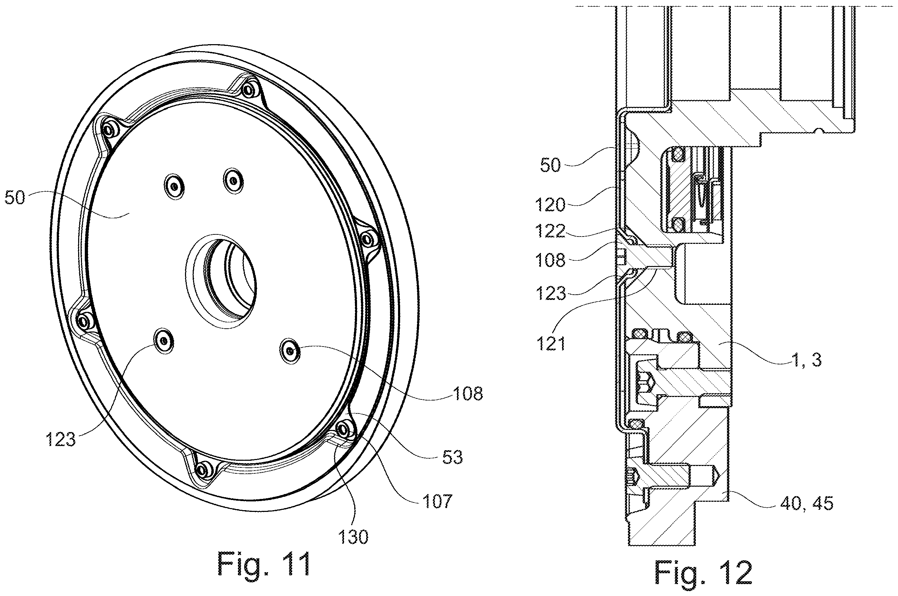

Figur 11 zeigt nun, abschließend für die Montageabfolge des Leitungselements 1 in einem Hybridmodul 4 gemäß einer zweiten Ausführungsform, das in Figur 10 dargestellte, ergänzt um das Deckelelement 50.

Die Figur 11 ist dabei im Wesentlichen identisch zur Figur 7, wobei in Figur 11 das Deckelelement 50 zusätzlich konische Versenkungen 123 aufweist, welche bei Anordnung des Deckelelements 50 durch erste Schrauben 106 in den radialen Deckelfortsätzen 53 in axialer Richtung mit den Fixierungsbohrungen 121 sowie den Fixierungslöchern 122 in Deckung gebracht sind. In diesen konischen Versenkungen 123 sind dabei die dritten Schrauben 108 angeordnet.

Die Figuren 12, 13, 14 und 15 zeigen in unterschiedlichen Winkelpositionen je eine geschnittene Seitenansicht der Figur 11 und zeigen somit die erfindungsgemäßen Aspekte der zweiten Ausführungsform.

Figur 12 zeigt dabei im Wesentlichen das gleiche wie Figur 6. Zu sehen ist ein Ausschnitt des im Hybridmodul 4 befestigten Leitungselements 1. Figur 12 umfasst weiterhin die Dichtscheibe 120, wobei Figur 12 außerdem eine Schnittdarstellung einer Fixierung der Dichtscheibe 120 darstellt. Zu sehen ist die konische Versenkung 123, in der eine dritte Schraube 108 angeordnet ist, wobei die dritte Schraube 108 dabei in die Fixierungsbohrung 121 eingeschraubt ist. Der Schraubenkopf der dritten Schraube 108 ist dabei in der konischen Versenkung 123 versenkt. Des Weiteren ist die Dichtscheibe 120 dargestellt, welche axial zwischen dem Deckelelement 50 und dem Leitungselement 1 bzw. dem radialen Gehäuseabschnitt 45 angeordnet ist. Die konische Versenkung 123 erstreckt sich dabei weg von der Verbrennungskraftmaschine.

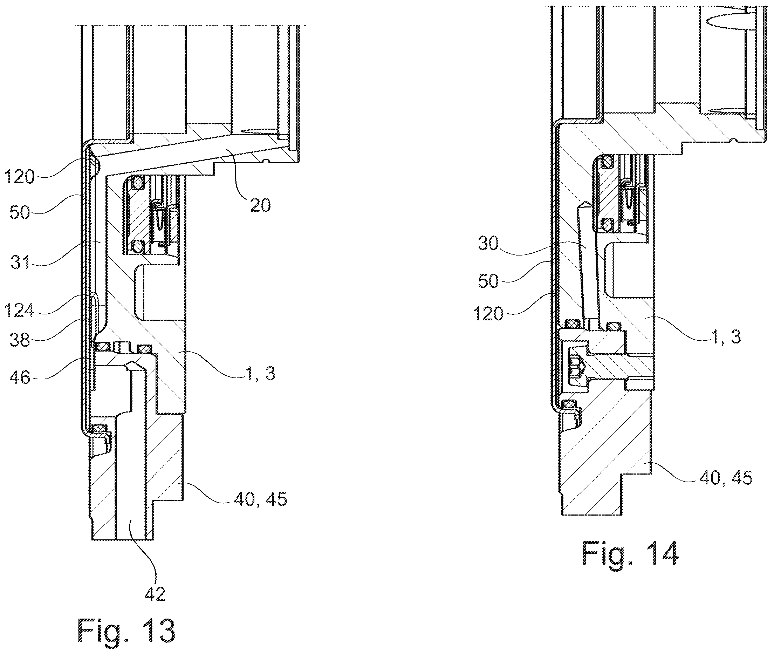

Figur 13 zeigt äquivalent zu den Figuren 4 und 5 einen Ausschnitt des im Hybridmodul 4 befestigten Leitungselements 1, geschnitten in einer Kühlleitung 42, einem Strömungsleitelement 31 sowie einem Kühlfluidkanal 20. Gemäß der zweiten Ausführungsform ist axial zwischen dem Deckelelement 50 und dem Leitungselement 1 bzw. dem radialen Gehäuseabschnitt 45 die Dichtscheibe 120 angeordnet. Dabei ist die Dichtscheibe 120 in der Fluidleitungsausnahme 124 geschnitten, wodurch zu sehen ist, dass in den Überlaufabschnitten 38, 46 sowie beim Strömungsleitelement 31 die Querschnittsfläche des Weges, den ein Kühlfluid durchfließt, um die axiale Dicke der Dichtscheibe 120 bzw. der Fluidleitungsausnahme 124 erweitert ist. Weiterhin dichtet die Dichtscheibe 120 den Fluss eines hier transportierbaren Kühlfluids gegen die Umwelt ab.

Figur 14 zeigt äquivalent zu den Figuren 2 und 3 einen Ausschnitt des im Hybridmodul 4 befestigten Leitungselements 1, geschnitten in einem Druckfluidkanal 30. Dabei ist ebenfalls die zwischen dem Deckelelement 50 und dem Leitungselement 1 bzw. dem radialen Gehäuseabschnitt 45 angeordnete Dichtscheibe 120 dargestellt. Aus Figur 14 wird damit ersichtlich, dass die Anordnung der Dichtscheibe 120 gemäß der zweiten Ausführungsform keinen Einfluss auf den Verlauf eines Druckfluids hat.

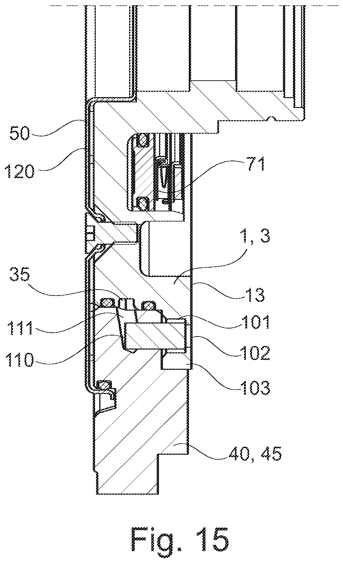

Figur 15 zeigt äquivalent zu Figur 12 einen Ausschnitt des im Hybridmodul 4 befestigten Leitungselements 1, geschnitten in einer Fixierung der Dichtscheibe 120. Dabei ist hier dargestellt, dass der radiale Gehäuseabschnitt 45 einen Entlüftungskanal 111 umfasst, welcher sich im Wesentlichen in radialer Richtung von der radialen Innenseite 15 des Gehäuseabschnitts 45 nach radial außen erstreckt. Der Entlüftungskanal 111 ist dabei als Hohlzylinder ausgestaltet und strömungstechnisch mit dem Umfangskanal 35 des Leitungselements 1 verbunden. Im Entlüftungskanal 111 ist dabei ein Entlüftungsventil 110 angeordnet, das sich im Wesentlichen in axialer Richtung erstreckt und strömungstechnisch mit dem Entlüftungskanal 111 verbunden ist. Das Entlüftungsventil 110 erstreckt sich dabei in axialer Richtung in eine im Befestigungsvorsprung 103 ausgebildete Ventilaussparung 101, welche strömungstechnisch mit einer in axialer Richtung auf der axialen Innenseite 13 des Befestigungsabschnitts 3 ausgebildeten Ventilauslassöffnung 102 verbunden ist. Mittels des Entlüftungsventils 110 kann somit Luft aus der Fluidleitung eines Druckfluids an die Umgebung außerhalb des Leitungselements 1 ausgelassen werden, um eine langfristige zuverlässige Betätigung des Kolbens 71 zu gewährleisten. Die Anordnung eines Entlüftungsventils 110 kann somit unabhängig der Ausführung mit oder ohne Dichtscheibe 120 genutzt werden.

Mit der erfindungsgemäßen Ausgestaltung des hier vorgeschlagenen Leitungselements wird eine Möglichkeit der Fluidleitung zur Verfügung gestellt, welche den Transport von Kühlfluid und Druckfluid strömungstechnisch separat voneinander und axial bauraumarm in einem Bauteil kombiniert.

### Bezugszeichenliste

- 1: Leitungselement
- 2: Zylindrischer abschnitt
- 3: Befestigungsabschnitt
- 4: Hybridmodul
- 5: Zylinderachse des Leitungselements
- 6: Rotationsachse des Hybridmoduls
- 10: radiale Außenseite des Zylindrischen Abschnitts
- 11: radiale Innenseite des Zylindrischen Abschnitts
- 12: axiale Außenseite des Befestigungsabschnitts
- 13: axiale Innenseite des Befestigungsabschnitts
- 14: radiale Außenseite des Befestigungsabschnitts
- 15: radiale Innenseite des Gehäuseabschnitts
- 16: axiale Außenseite des Gehäuseabschnitts
- 17: axiale Innenseite des Gehäuseabschnitts
- 20: Kühlfluidkanal
- 21: Gewinde
- 30: Druckfluidkanal
- 31: Strömungsleitelement
- 32: erster hohlzylindrischer Raum
- 33: zweiter hohlzylindrischer Raum
- 34: ringförmiger Betätigungszylinder
- 35: Umfangskanal
- 36: erste umlaufende Ringnut
- 37: zweite umlaufende Ringnut
- 38: Leitungselement-Überlaufabschnitt
- 39: Druckfluiddichtung
- 40: Hybridmodulgehäuse
- 41: Druckleitung
- 42: Kühlleitung
- 43: radialer Kühlleitungsabschnitt
- 44: axialer Kühlleitungsabschnitt
- 45: radialer Gehäuseabschnitt
- 46: Gehäuse-Überlaufabschnitt
- 50: Deckelelement
- 51: erste Deckelelementdichtung
- 52: zweite Deckelelementdichtung
- 53: radialer Deckelfortsatz
- 54: erster axialer Deckelfortsatz
- 55: zweiter axialer Deckelfortsatz
- 56: Öffnung
- 60: Zwischenwelle
- 61: Vorlastmutter
- 62: erstes Rotationslager
- 63: zweites Rotationslager
- 64: drittes Rotationslager
- 70: Betätigungseinrichtung
- 71: Kolben
- 72: Kolbendichtungselement
- 73: Rückstellfeder
- 80: Kupplungseinheit
- 81: Trennkupplung
- 82: erste Teilkupplung
- 83: zweite Teilkupplung
- 90: elektrische Maschine
- 91: Stator
- 92: Rotor
- 93: Rotorträger
- 100: Befestigungsbohrungen
- 101: Ventilaussparung
- 102: Ventilauslassöffnung
- 103: Befestigungsvorsprung
- 104: erster Gehäusebohrung
- 105: zweite Gehäusebohrung
- 106: erste Schraube
- 107: zweite Schraube
- 108: dritte Schraube
- 110: Entlüftungsventil
- 111: Entlüftungskanal
- 120: Dichtscheibe
- 121: Fixierungsbohrung
- 122: Fixierungslöcher
- 123: konische Versenkung
- 124: Fluidleitungsausnahme
- 130: Ausbuchtung
- 131: axiale Versenkungen
- 132: radial innerer Bereich
- 133: radial äußerer Bereich
- 134: ringförmige Ausnehmung
- 200: Schwingungsdämpfer
- 201: erste Getriebeeingangswelle
- 202: zweite Getriebeeingangswelle
- 203: viertes Rotationslager
- 204: fünftes Rotationslager
- 205: sechstes Rotationslager
- 206: Betätigungsleitungsträger
- 207: Abtriebswelle

## Patentansprüche

1. Leitungselement (1) zur Leitung eines Druckfluids zur hydraulischen Betätigung einer Betätigungseinrichtung (70) einer Kupplungseinheit (80) sowie zur Leitung eines Kühlfluids zur Kühlung einer Kupplungseinheit (80), umfassend einen zylindrischen Abschnitt (2), insbesondere einen hohlzylindrischen Abschnitt, sowie einen sich im Wesentlichen in einer senkrecht zur Zylinderachse (5) des zylindrischen Abschnittes (2) erstreckenden Ebene angeordneten und mit dem zylindrischen Abschnitt (2) mechanisch verbundenen Befestigungsabschnitt (3), wobei im Befestigungsabschnitt (3) wenigstens ein Druckfluidkanal (30) ausgebildet ist, der im Wesentlichen radial zur Zylinderachse (5) verläuft, zum Transport von Druckfluid nach radial innen zwecks Versorgung einer an oder in dem Befestigungsabschnitt (3) angeordneten hydraulischen Betätigungseinrichtung (70), wobei der Druckfluidkanal (30) radial außerhalb der Betätigungseinrichtung (70) angeordnet ist und wobei der Befestigungsabschnitt (3) an einer axialen Außenseite (12) wenigstens ein Strömungsleitelement (31) ausbildet, welches im Wesentlichen radial zur Zylinderachse (5) verläuft zum Transport von Kühlfluid nach radial innen, wobei das Leitungselement (1) weiterhin wenigstens einen Kühlfluidkanal (20) aufweist, welcher im zylindrischen Abschnitt (2) mit wenigstens einer axialen Richtungskomponente ausgebildet ist, wobei das Strömungsleitelement (31) strömungstechnisch mit dem Kühlfluidkanal (20) verbunden ist zwecks Versorgung einer in der Umgebung des Leitungselements (1) angeordneten oder anordbaren Kupplungseinheit (80) und/oder elektrischen Maschine (90) mit Kühlfluid.

2. Leitungselement (1) nach Anspruch 1,
**dadurch gekennzeichnet, dass** der Befestigungsabschnitt (3) einen hohlzylinderförmigen Raum (32) ausbildet zur Ausbildung eines ringförmigen Betätigungszylinders (34) der Betätigungseinrichtung (70) zwecks Aufnahme eines ringförmigen Kolbens (71), wobei der Druckfluidkanal (30) strömungstechnisch mit dem hohlzylinderförmigen Raum (32) verbunden ist, um ein Druckfluid in den hohlzylinderförmigen Raum (32) zwecks Verschiebung eines dort angeordneten Kolbens (71) zu leiten.

3. Leitungselement (1) nach einem der Ansprüche 1 und 2,
**dadurch gekennzeichnet, dass** der Befestigungsabschnitt (3) an seiner radialen Außenseite (14) wenigstens bereichsweise einen Umfangskanal (35) ausbildet, der strömungstechnisch mit dem Druckfluidkanal (30) verbunden ist.

4. Leitungselement (1) nach einem der vorhergehenden Ansprüche,
**dadurch gekennzeichnet, dass** das Strömungsleitelement (31) als Vertiefung in der axialen Außenseite (12) des Befestigungsabschnitts (3) ausgebildet ist.

5. Leitungselement (1) nach einem der vorhergehenden Ansprüche,
**dadurch gekennzeichnet, dass** auf oder an der axialen Außenseite (12) des Befestigungsabschnitts (3) eine umlaufende Ringnut (36) zur Weiterleitung an das Strömungsleitelement (31) angeordnet ist, wobei die Ringnut (36) mit dem Strömungsleitelement (31) strömungstechnisch verbunden ist.

6. Leitungselement (1) nach einem der vorhergehenden Ansprüche,
**dadurch gekennzeichnet, dass** ein Strömungsleitelement (31) mit mehreren Kühlfluidkanälen (20), insbesondere drei Kühlfluidkanälen(20), strömungstechnisch verbunden ist.

7. Leitungselement (1) nach einem der Ansprüche 4 bis 6,
**dadurch gekennzeichnet, dass** das Leitungselement (1) eine Dichtscheibe (120) umfasst, welche axial an der axialen Außenseite (12) des Befestigungsabschnitts (3) angeordnet ist und zumindest an der axialen Außenseite (12) des Befestigungsabschnitts (3) wenigstens bereichsweise anliegt, wobei die Dichtscheibe (120) dabei eine Fluidleitungsausnahme (124) umfasst, deren Kontur in axialer Richtung zumindest um das Strömungsleitelement (31) herum ausgebildet ist.

8. Leitungselement (1) nach einem der vorhergehenden Ansprüche,
**dadurch gekennzeichnet, dass** der Kühlfluidkanal (20) als Hohlzylinder ausgestaltet ist und zusätzlich zu seiner axialen Richtungskomponente im zylindrischen Abschnitt (2) auch eine radiale Richtungskomponente aufweist, wobei sich der Kühlfluidkanal (20) mit zunehmender Entfernung vom Befestigungsabschnitt (3) der Zylinderachse (5) nähert.

9. Hybridmodul (4) für ein Kraftfahrzeug zum Ankoppeln einer Verbrennungskraftmaschine sowie eines Getriebes, umfassend eine elektrische Maschine (90), ein Hybridmodulgehäuse (40) sowie mechanisch damit fest verbunden ein Leitungselement (1) gemäß einem der Ansprüche 1 bis 8 und zumindest eine Druckleitung (41) zur Zuführung eines Druckfluids sowie eine Kühlleitung (42) zur Zuführung eines Kühlfluids zum Leitungselement (1), wobei die Druckleitung (41) strömungstechnisch mit dem Druckfluidkanal (30) im Befestigungsabschnitt (3) verbunden ist und die Kühlleitung (42) strömungstechnisch mit dem Strömungsleitelement (31) verbunden ist.

10. Antriebsanordnung, umfassend ein Hybridmodul (4) nach Anspruch 9 sowie ein Antriebsaggregat, insbesondere eine Verbrennungskraftmaschine, sowie ein Getriebe, wobei das Hybridmodul (4) mit dem Antriebsaggregat und dem Getriebe mechanisch über wenigstens eine Kupplungseinheit (80) des Hybridmoduls (4) verbunden oder verbindbar ist.

## Claims

1. A conducting element (1) for conducting a pressurised fluid for hydraulically actuating an actuating device (70) of a clutch unit (80) and for conducting a cooling fluid for cooling a clutch unit (80), comprising a cylindrical section (2), in particular a hollow-cylindrical section, and an attachment section (3) arranged essentially in a plane extending perpendicular to the cylinder axis (5) of the cylindrical section (2) and mechanically connected to the cylindrical section (2), wherein at least one pressurised fluid channel (30) is formed in the attachment section (3), which runs essentially radially to the cylinder axis (5), for transporting pressurised fluid radially inwards for the purpose of supplying a hydraulic actuating device (70) arranged on or in the fastening section (3), wherein the pressurised fluid channel (30) is arranged radially outside of the actuating device (70) and wherein the attachment section (3) forms at least one flow guide element (31) at an axial outer side (12), which flow guide element runs essentially radially to the cylinder axis (5) for transporting cooling fluid radially inwards, wherein the conducting element (1) furthermore has at least one cooling fluid channel (20) which is formed in the cylindrical section (2) with at least one axial directional component, wherein the flow guide element (31) is fluidically connected to the cooling fluid channel (20) for the purpose of supplying cooling fluid to a clutch unit (80) and/or an electric machine (90) arranged or arrangeable in the vicinity of the conducting element (1).

2. The conducting element (1) according to claim 1,
**characterised in that** the attachment section (3) forms a hollow-cylindrical space (32) for forming an annular actuating cylinder (34) of the actuating device (70) for the purpose of accommodating an annular piston (71), wherein the pressurised fluid channel (30) is fluidically connected to the hollow-cylindrical space (32) in order to conduct a pressurised fluid into the hollow-cylindrical space (32) for the purpose of displacing a piston (71) arranged therein.

3. The conducting element (1) according to one of claims 1 and 2,
**characterised in that** the attachment section (3) forms on its radial outer side (14), at least in regions, a circumferential channel (35) which is fluidically connected to the pressurised fluid channel (30).

4. The conducting element (1) according to one of the preceding claims,
**characterised in that** the flow guide element (31) is formed as a depression in the axial outer side (12) of the attachment section (3).

5. The conducting element (1) according to one of the preceding claims,
**characterised in that** a circumferential annular groove (36) is arranged on or at the axial outer side (12) of the attachment section (3) for transmission to the flow guide element (31), wherein the annular groove (36) is fluidically connected to the flow guide element (31).

6. The conducting element (1) according to one of the preceding claims,
**characterised in that** a flow guide element (31) is fluidically connected to a plurality of cooling fluid channels (20), in particular three cooling fluid channels (20).

7. The conducting element (1) according to one of claims 4 to 6,
**characterised in that** the conducting element (1) comprises a sealing disc (120) which is arranged axially on the axial outer side (12) of the attachment section (3) and rests, at least in regions, on the axial outer side (12) of the attachment section (3), wherein the sealing disc (120) comprises a fluid line recess (124), the contour of which is formed at least around the flow guide element (31) in the axial direction.

8. The conducting element (1) according to one of the preceding claims,
**characterised in that** the cooling fluid channel (20) is designed as a hollow cylinder and, in addition to its axial directional component in the cylindrical section (2), also has a radial directional component, wherein the cooling fluid channel (20) approaches the cylinder axis (5) with increasing distance from the attachment section (3).

9. A hybrid module (4) for a motor vehicle for coupling an internal combustion engine and a transmission, comprising an electric machine (90), a hybrid module housing (40) and, mechanically firmly connected thereto, a conducting element (1) according to one of claims 1 to 8 and at least one pressure line (41) for supplying a pressurised fluid and a cooling line (42) for supplying a cooling fluid to the line element (1), wherein the pressure line (41) is fluidically connected to the pressurised fluid channel (30) in the attachment section (3) and the cooling line (42) is fluidically connected to the flow guide element (31).

10. A drive assembly, comprising a hybrid module (4) according to claim 9 and a drive unit, in particular an internal combustion engine, and a transmission, wherein the hybrid module (4) is mechanically connected or connectable to the drive unit and the transmission via at least one clutch unit (80) of the hybrid module (4).

## Revendications

1. Élément de conduite (1) pour conduire un fluide sous pression pour actionner hydrauliquement un dispositif d'actionnement (70) d'une unité d'embrayage (80) et pour conduire un fluide de refroidissement pour refroidir une unité d'embrayage (80), comprenant une section cylindrique (2), en particulier une section cylindrique creuse, et une section de fixation (3) disposée sensiblement dans un plan s'étendant perpendiculairement à l'axe cylindrique (5) de la section cylindrique (2) et reliée mécaniquement à la section cylindrique (2), au moins un canal de fluide sous pression (30) étant formé dans la section de fixation (3) qui s'étend sensiblement radialement par rapport à l'axe du cylindre (5), pour transporter le fluide sous pression radialement vers l'intérieur dans le but d'alimenter un dispositif d'actionnement hydraulique (70) disposé sur ou dans la section de fixation (3), le canal de fluide sous pression (30) étant disposé radialement à l'extérieur du dispositif d'actionnement (70) et la partie de fixation (3) sur un côté extérieur axial (12) formant au moins un élément de conduite d'écoulement (31) qui s'étend sensiblement radialement par rapport à l'axe du cylindre (5) pour le transport du fluide de refroidissement radialement vers l'intérieur, l'élément de conduite (1) présentant en outre au moins un canal de fluide de refroidissement (20) qui se trouve dans la section cylindrique (2) est conçu avec au moins une composante directionnelle axiale, l'élément de conduite d'écoulement (31) étant relié fluidiquement au canal de fluide de refroidissement (20) dans le but d'alimenter en fluide de refroidissement une unité d'embrayage (80) et/ou une machine électrique (90) disposée(s) ou pouvant être disposée(s) aux environs de l'élément de conduite (1).

2. Élément de conduite (1) selon la revendication 1,
**caractérisé en ce que** la section de fixation (3) forme un espace cylindrique creux (32) pour former un cylindre d'actionnement annulaire (34) du dispositif d'actionnement (70) dans le but de loger un piston annulaire (71), le canal de fluide sous pression (30) étant en communication fluidique avec l'espace cylindrique creux (32) afin de conduire un fluide sous pression dans l'espace cylindrique creux (32) dans le but de déplacer un piston (71) disposé à cet endroit.

3. Élément de conduite (1) selon l'une quelconque des revendications 1 et 2,
**caractérisé en ce que** la section de fixation (3) sur son côté extérieur radial (14) forme au moins partiellement un canal périphérique (35) qui est relié fluidiquement au canal de fluide sous pression (30).

4. Élément de conduite (1) selon l'une quelconque des revendications précédentes,
**caractérisé en ce que** l'élément de conduite d'écoulement (31) est réalisé sous la forme d'un creux dans le côté extérieur axial (12) de la section de fixation (3).

5. Élément de conduite (1) selon l'une quelconque des revendications précédentes,
**caractérisé en ce qu'**une rainure annulaire circonférentielle (36) est disposée sur ou sur le côté extérieur axial (12) de la section de fixation (3) pour la transmission à l'élément de conduite d'écoulement (31), la rainure annulaire (36) étant reliée fluidiquement à l'élément de conduite d'écoulement (31).

6. Élément de conduite (1) selon l'une quelconque des revendications précédentes,
**caractérisé en ce qu'**un élément de conduite d'écoulement (31) est relié fluidiquement à une pluralité de canaux de fluide de refroidissement (20), en particulier à trois canaux de fluide de refroidissement (20).

7. Élément de conduite (1) selon l'une quelconque des revendications 4 à 6,
**caractérisé en ce que** l'élément de conduite (1) comprend un disque d'étanchéité (120) qui est disposé axialement sur le côté extérieur axial (12) de la section de fixation (3) et repose au moins par endroits sur le côté extérieur axial (12) de la section de fixation (3), le disque d'étanchéité (120) comprenant un évidement de conduite de fluide (124), dont le contour est formé au moins autour de l'élément de conduite d'écoulement (31) dans la direction axiale.

8. Élément de conduite (1) selon l'une quelconque des revendications précédentes,
**caractérisé en ce que** le canal de fluide de refroidissement (20) est conçu comme un cylindre creux et, en plus de sa composante de direction axiale dans la section cylindrique (2), présente également une composante de direction radiale, le canal de fluide de refroidissement (20) se rapprochant de l'axe de cylindre (5) au fur et à mesure qu'il s'éloigne de la section de fixation (3).

9. Module hybride (4) pour véhicule automobile destiné à coupler un moteur à combustion interne et une transmission, comprenant une machine électrique (90), un carter de module hybride (40) et solidaire mécaniquement d'un élément de conduite (1) selon l'une quelconque des revendications 1 à 8 et au moins une conduite sous pression (41) pour fournir un fluide sous pression et une conduite de refroidissement (42) pour fournir un fluide de refroidissement à l'élément de conduite (1), la conduite sous pression (41) étant reliée fluidiquement au canal de fluide sous pression (30) dans la section de fixation (3) et la conduite de refroidissement (42) étant reliée fluidiquement à l'élément de conduite d'écoulement (31).

10. Arrangement d'entraînement, comprenant un module hybride (4) selon la revendication 9 et une unité d'entraînement, en particulier un moteur à combustion interne, et une transmission, le module hybride (4) étant relié ou pouvant être relié mécaniquement à l'unité d'entraînement et à la transmission via au moins une unité d'embrayage (80) du module hybride (4).
